# EUROPÄISCHE PATENTANMELDUNG

(11) **EP 2 267 860 A2**
(43) Veröffentlichungstag der Anmeldung: **29.12.2010**
(21) Anmeldenummer: 10006114.2
(22) Anmeldetag: 12.06.2010
(51) Int. Cl.: H02J 3/42

(54) **Anfahrquelle für Wechselrichter zur Synchronisation mit dem Stromnetz**

(30) Priorität: 18.06.2009 DE 102009025363
(71) Anmelder: Adensis GmbH, 01129 Dresden (DE)
(72) Erfinder: Beck, Bernhard, 97332 Volkach/Dimbach (DE)

(57) **Zusammenfassung**

Ein Verfahren zur Vorbereitung der Netzsynchronisation eines Wechselrichters (3) mit einem Photovoltaikgenerator als Primärenergiequelle (Q1), sieht folgende Verfahrensschritte vor:
- der Wechselrichter (3) von einer zusätzlichen Energiequelle (Q2) mit Energie versorgt wird, dass
- die Frequenz, die Phasenlage und die Ausgangsspannung des Wechselrichters (3) mit Hilfe der zusätzlichen Energiequelle (Q2) an die Verhältnisse im Stromversorgungsnetz (7) angepasst werden, und dass
- nach der erfolgten Anpassung die Primärenergiequelle (Q1) mit dem Wechselrichter (3) verbunden wird,
- die zusätzliche Energiequelle (Q2) eine unabhängig von der Primärenergiequelle (Q1) betreibbare Gleichstromquelle ist, und bei dem
- die zusätzliche Energiequelle (Q2) parallel zu den Eingangsklemmen (2,2') des Wechselrichters (3) verschaltet ist.

Das Verfahren bietet den Vorteil, dass die Auslegung des Wechselrichters (3) auf die zulässige Leerlaufspannung auch im Betriebsfall genutzt werden kann, ohne dass schaltungstechnische Eingriffe in die Primärenergiequelle (Q1) vorzunehmen sind.

## Beschreibung

Die Anmeldung betrifft ein Verfahren zur Vorbereitung der Netzsynchronisation eines Wechselrichters mit einem Photovoltaikgenerator als Primärenergiequelle (Q1), wobei der Wechselrichter an ein Stromversorgungsnetz anschließbar ist. Die Anmeldung bezieht sich ebenfalls auf eine Vorrichtung zur Durchführung des Verfahrens.

Ein solches Verfahren ist geeignet, den bei einer Photovoltaikanlage vom Wechselrichter erzeugten Wechselstrom in das Stromversorgungsnetz, vorzugsweise in ein öffentliches Netz, einzuspeisen. Es sind Photovoltaik-Anlagen bekannt, bei denen der von den Photovoltaik-Modulen insgesamt gelieferte Gleichstrom mittels eines elektrischen Umformers oder Wechselrichters in Wechselstrom umgewandelt wird, der dann in das Stromversorgungsnetz eingespeist wird. Zur Zeit werden auf dem Markt für Großanlagen elektrische Wechselrichter angeboten, die für eine Leistung von bis zu 700 kW ausgelegt sind und die natürlich entsprechend teuer sind. Für eine Anlage größerer Leistung müssen mehrere elektrische Wechselrichter bereitgestellt werden. Beispielsweise werden heutzutage für eine Solar-Anlage einer Leistung von 2,5 MW mindestens 9 elektrische Wechselrichter eingesetzt, von denen jeder für eine Leistung von 330 kW ausgelegt ist. Für Dachanlagen und kleinere Freifeldanlagen sind entsprechend kleiner ausgelegte Wechselrichter in nahezu allen geforderten Größen von einigen KW bis hin zu einigen Hundert KW verfügbar.

Photovoltaikanlagen an sich sind sattsam bekannt. In der Regel sind diese Anlagen so aufgebaut, dass eine Vielzahl von Strängen parallel geschaltet wird. Die maximale Anzahl der Stränge richtet sich dabei nach der Leistung des Wechselrichters, an den die Stränge angeschlossen sind. Moderne Wechselrichter können bis zu einer Eingangsgleichspannung von ca. 900 Volt ausgelegt sein.

Zurzeit ist es üblich, jeden Strang der Anlage aus acht Photovoltaikmodulen aufzubauen, von denen jedes 60 Photovoltaikzellen aufweist. Insgesamt sind somit 480 Zellen in Reihe zueinander geschaltet. An jeder Zelle liegt im Leerlauffall eine Spannung von 1,5 Volt an, was zu einer Strangspannung von 720 Volt führt, was deutlich unter der von den Herstellern der Module angegebenen Maximalspannung von 1000 Volt liegt. Liegt eine höhere Spannung an, kann dies zur Zerstörung der Module und der gesamten Anlage inklusive Wechselrichter führen.

Im Betrieb der Anlage sinkt die Leerlaufspannung der Zellen auf eine Betriebsspannung von ca. 1 bis 1,1 Volt, so dass zwischen den Enden der herkömmlichen Stränge eine Spannung zwischen 480 Volt und 510 Volt anliegt. Der Übersichtlichkeit halber sei von 1 Volt Betriebsspannung pro Zelle ausgegangen, also 60 Volt Spannung über ein einzelnes Photovoltaikmodul mit 60 Zellen. Sollte der Netzbetreiber, an den die Photovoltaikanlage angeschlossen ist, diese aus welchen Gründen auch immer vom Netz nehmen (e.g. Kurzschluss in dem Einspeisekabel) springt die Spannung auf die genannten 720 Volt, was für die Module und die Anlage unkritisch ist.

Auf der anderen Seite wäre es wünschenswert, die Photovoltaik-Module und auch den Wechselrichter im Normalbetrieb mit einer höheren Spannung als 480 - 510 Volt, idealerweise mit der zulässigen Höchstspannung von 1000 Volt zu betreiben. Dieses ist aber nicht möglich, da dann im Leerlauffall eine Spannung von ca. 1500 Volt zur Zerstörung der Photovoltaik-Module, des Wechselrichters und der Gesamtanlage führen würde.

Die Auslegung der Wechselrichter auf die obere zulässige Spannungsgrenze von zur Zeit ca. 1000 Volt erfordert einen hohen Aufwand bezüglich der Spannungsfestigkeit der beteiligten Komponenten, wie zum Beispiel der Kondensatoren, sowie bei der Stromfestigkeit, wie z.B bei der Isolierung und der Querschnittsauslegung der Kabel. Dieser Aufwand ist alleine der auftretenden hohen Leerlaufspannung geschuldet. Es wäre durchaus möglich, den Wechselrichter auch im Lastfall mit den 1000 Volt zu betreiben und beim Auftreten einer Störung, die zu einer Überspannung oberhalb des Grenzwertes von den beispielhaften 1000 Volt führt, den Wechselrichter von der Photovoltaikanlage zu trennen. Dabei besteht dann allerdings anschließend das Problem, dass, wenn einmal vom Netz getrennt, die Photovoltaikanlage nicht wieder an das Netz angeschlossen werden kann, sofern an ihren Ausgangsklemmen eine Leerlaufspannung von weit über 1000 Volt, z.B. den genannten 1500 Volt , anliegt. Dieses ist aber immer dann der Fall, wenn die PV-Anlage zu ihren effektivsten Zeiten betrieben wird.

Die Erfindung geht von der Überlegung aus, dass die ohnehin vorhandene, zur Zeit als Überdimensionierung zu betrachtende Auslegung des Wechselrichters bezüglich seiner Strom- und Spannungsfestigkeit besser genutzt werden sollte. Entsprechend liegt vorliegender Erfindung die Aufgabe zugrunde, einen Wechselrichter an ein Versorgungsnetz anzuschließen, auch wenn die von der Photovoltaikanlage bereitgestellte Leerlauf-Gleichspannung weit über der zulässigen Betriebsspannung des Wechselrichters liegt. Ein weiterer Aspekt sieht die Bereitstellung der hierzu benötigten Komponenten vor.

Diese Aufgabe wird bezüglich des Verfahrens erfindungsgemäß dadurch gelöst, dass
- der Wechselrichter von einer zusätzlichen Energiequelle mit Energie versorgt wird, dass
- die Frequenz, die Phasenlage und die Ausgangsspannung des Wechselrichters mit Hilfe der zusätzlichen Energiequelle an die Verhältnisse im Stromversorgungsnetz angepasst werden, und dass
- nach der erfolgten Anpassung die Primärenergiequelle mit dem Wechselrichter verbunden wird,
- die zusätzliche Energiequelle eine unabhängig von der Primärenergiequelle betreibbare Gleichstromquelle ist, und bei dem
- die zusätzliche Energiequelle parallel zu den Eingangsklemmen des Wechselrichters verschaltet ist.

Die zweite Energiequelle, die vorzugsweise ein Gleichspannungs-Netzteil ist, ist auf eine Spannung in einem Spannungsbereich zwischen 300 und 600 Volt ausgelegt. Es können auch mehrere Ausgangsspannungen oder eine einstellbare Ausgangsspannung, wie es bei Netzteilen üblich ist, bereitgestellt werden. Die als Anfahr- oder Aufschalthilfe benötigte Spannung richtet sich nach dem eingesetzten Wechselrichter und dessen Regler zur Einstellung des maximalen Leistungspunktes ( Maximum Power Point - Regler, auch kurz MPP-Regler genannt). Ist die dem Regler von der PV-Anlage zur Verfügung gestellte Spannung zu klein, z.B. unterhalb einer Mindestspannung von ca. 300 Volt, so kann er nicht mit seinem Regelverhalten einsetzen. Ist die Spannung hingegen zu groß, also oberhalb der zulässigen Betriebsspannung, so führt dies zu seiner Zerstörung. Die zweite Spannungsquelle ist auf einen Wert innerhalb dieses Bereichs ausgelegt. Dabei muss die zweite Spannungsquelle zur Abgabe einer Mindestleistung befähigt sein, die im Bereich von einem KW bis einigen Hundert KW je nach Größe des verwendeten Wechselrichters liegt. Ist der Wechselrichter einmal mit dem Versorgungsnetz verbunden, kann die PV-Anlage mit dem Eingang des Wechselrichters verbunden werden. Die hohe Leerlaufspannung von z.B. 1500 Volt bricht zusammen auf die Betriebsspannung von 1000 Volt, die für den Wechselrichter ungefährlich ist.

Um beim Zuschalten der PV-Anlage das Auftreten hoher Ausgleichsströme zwischen der PV-Anlage und der zweiten Energiequelle zu verhindern ist entweder eine Sperrdiode vorzusehen, oder aber die Betriebsführung ist so vorzusehen, dass die zweite Energiequelle unmittelbar vor dem Zuschalten der PV-Anlage an den Wechselrichter von diesem weggenommen wird. Die Leerlaufspannung der PV-Anlage von am Beispiel gesagten 1500 Volt bricht innerhalb von Mikrosekunden auf die für den Wechselrichter ungefährliche Betriebsspannung von 1000 Volt zusammen, ohne dass dabei ein Schaden auftreten kann. Die Wechselrichterkomponenten sind so träge, dass die erreichte Anpassung an die Netzverhältnisse in der Phase des Umschaltens (erst Wegnahme zweite Energiequelle, dann Zuschalten erste Energiequelle) nicht verloren gehen. Dieses Umschalten kann mit einem Schalter realisiert sein, bei dem zwei Schaltvorgänge in einer nur wenige Mikrosekunden aufeinander ablaufenden Folge geschehen: Zuerst Trennen der zweiten Energiequelle vom Wechselrichter, dann Zuschalten der ersten Energiequelle = PV-Anlage an den Wechselrichter.

Es ist vorteilhaft, wenn die zweite Energiequelle nach dem Ankoppeln der Photovoltaikanlage an das Versorgungsnetz vom Wechselrichter getrennt wird, um seine Alterung zu schonen. Wenn dieser Aspekt keine Rolle spielt, kann die zweite Energiequelle unter Zwischenschaltung einer Sperrdiode auch zumindest tagsüber permanent mit dem Wechselrichter verbunden bleiben. Es wird in diesem Fall immer dann Leistung von der zweiten Energiequelle an den Wechselrichter abgegeben, wenn die Ausgangsspannung der PV-Anlage unterhalb der Ausgangsspannung der zweiten Energiequelle liegt.

Nach der erfolgten Anpassung der Frequenz, der Spannung und der Phasenlage des Wechselrichters an die Frequenz, Spannung und Phasenlage des Versorgungsnetzes wird der Wechselrichter mittels seiner elektrischen Ausgangsklemmen mit dem Stromversorgungsnetz verbunden, nachdem die zweite Energiequelle von dem Wechselrichter getrennt wurde. Die zweite Energiequelle bleibt dann in Bereitschaft für ein erneutes Synchronisieren.

Das zum Umschalten verwendete Schaltelement kann ein Doppelschalter sein, welcher gleichzeitig mit dem Trennen der zweiten Gleichstromquelle vom Wechselrichter die Photovoltaik-Anlage als primäre Gleichstromquelle mit dem Wechselrichter verbindet.

Die zweite Energiequelle wird aus dem Stromversorgungsnetz gespeist, insbesondere, wenn sie permanent oder über einen längeren Zeitraum mit dem Wechselrichter verbunden ist. Da ein Ankoppeln des Photovoltaikgenerators im Hochbetrieb der PV-Anlage relativ selten ist, kann die zweite Energiequelle auch ein elektrischer Energiespeicher, wie ein herkömmlicher Bleiakkumulator sein.

Es ist von Vorteil, wenn zwischen dem Wechselrichter und dem Stromversorgungsnetz ein weiteres Schaltelement vorgesehen ist, bei dessen Betätigung der Wechselrichter an das Stromversorgungsnetz angekoppelt wird und die zweite Energiequelle vom Stromversorgungsnetz getrennt wird. Die Leistung der zweiten Energiequelle kann unterhalb von 10% der Nennleistung des Wechselrichters, insbesondere unterhalb von 1%, liegen. Der Wert richtet sich nach der Größe des anzufahrenden PV-Generators, beziehungsweise des Wechselrichters an welchen dieser ggf. gemeinsam mit weiteren PV-Generatoren angeschlossen ist.

Es ist nicht notwendigerweise vorgesehen, dass der komplette PV-Generator, sofern er aus mehreren unabhängig voneinander betreibbaren PV-Generatoren besteht, an den Wechselrichter und das Netz in einem Zug zugeschaltet wird. Abhängig von den Verhältnissen vor Ort, insbesondere der Anzahl an eingesetzten Wechselrichtern und der Größe der PV-Anlage kann es sinnvoll sein, zunächst nur einen Teil der Photovoltaikanlage nach dessen erfolgter Frequenzanpassung und Phasenanpassung an den Wechselrichter zuzuschalten. Dabei kann auch ein Wechselrichter, der von einem Photovoltaikgenerator gespeist wird, der nicht vom Netz genommen werden musste, als zweite Energiequelle fungieren.

Eine Vorrichtung zur Durchführung des Verfahrens zeichnet sich erfindungsgemäß durch i) eine Vielzahl von Photovoltaik-Modulen, ii) einen an die Photovoltaik-Module angeschlossenen Wechselrichter, der von den Photovoltaik-Modulen mit einer Gleichspannung und einem Gleichstrom gespeist ist, iii) eine zweite Energiequelle, insbesondere eine weitere Gleichstromquelle, die an den Wechselrichter anschließbar ist, iv) eine Regel- und Steuereinheit die die Ausgangsspannung des Wechselrichters mittels der zweiten Energiequelle regelt und steuert, bis die Netzfrequenz und die Phasenlage des Stromversorgungsnetzes am Ausgang des Wechselrichters anliegen, und v) einen Umschalter, mittels dem der Ausgang des Wechselrichters an das Stromversorgungsnetz anschließbar ist, aus.

Die mit der Vorrichtung verbundenen Vorteile und auch weiteren Ausgestaltungen sind mit den bezüglich des Verfahrens genannten Vorteilen und Ausgestaltungen identisch. Darüber hinaus ist anzumerken, dass die zweite Energiequelle vorzugsweise im Gehäuse des Wechselrichters untergebracht ist.

Weitere Vorteile und Ausgestaltungen der Erfindung ergeben sich aus der Beschreibung eines Ausführungsbeispiels anhand der Figuren. Es zeigen:
- Fig. 1: ein Prinzipschaltbild einer Photovoltaikanlage mit zweiter Energiequelle;
- Fig. 2.: Ein Prinzipschaltbild einer Photovoltaikanlage mit einer Batterie als zweiter Energiequelle; und
- Fig. 3: ein Prinzipschaltbild einer Photovoltaikanlage mit einem am Netz verbliebenen Photovoltaikgenerator als zweiter Energiequelle,

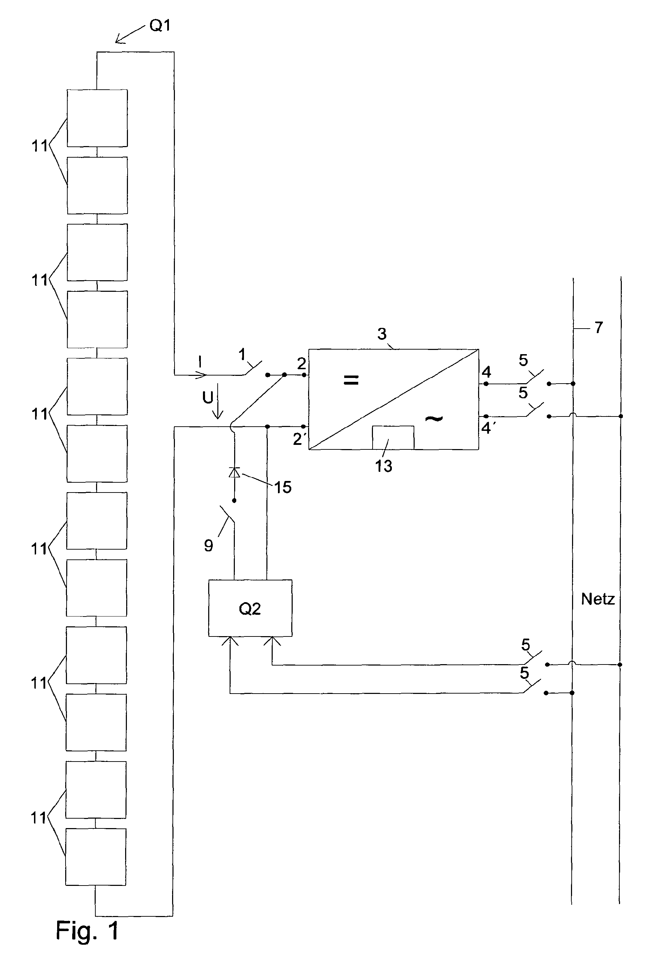

In der Figur 1 ist schematisch eine Photovoltaikgenerator als erste Energiequelle oder Primärenergiequelle Q1 gezeigt. Der Photovoltaikgenerator Q1 ist über einen ersten Schalter 1 mit den Eingangsklemmen 2,2' eines Wechselrichters 3 verbunden. Die Ausgangskontakte 4,4' des Wechselrichters 3 wiederum sind mittels eines Schalterelements 5 mit einem öffentlichen Versorgungsnetz 7 verbindbar, von dem nur zwei Phasen gezeigt sind. Dieser prinzipielle Aufbau ist soweit Stand der Technik. Wie es bereits im einleitenden Teil der Beschreibung ausgeführt wurde, muss der Wechselrichter 3 in allen seinen Komponenten auf die Leerlaufspannung des PV-Generators Q1 ausgelegt sein. Diese kann im Sommer um die Mittagszeit z.B. 720 Volt betragen. Im Betrieb liegt eine Spannung von dann ca. 480 Volt an. Kommt es aus welchen Gründen auch immer bei dieser Situation zu einem Abschaltvorgang des PV-Generators Q1 so kann diese wieder gefahrlos an den Wechselrichter 3 angekoppelt werden, da noch ein hoher Sicherheitsabstand der 720 Volt Leerlaufspannung zur maximal zulässigen Spannung von 1000 Volt besteht.

Mit Hilfe einer zweiten Energiequelle Q2 lässt sich die Auslegung des Wechselrichters 3 und/oder der Primärenergiequelle Q1 zugunsten einer besseren Ausnutzung der vorhandenen Komponenten, oder zugunsten eines Zuschaltens einer größeren PV-Anlage Q1 an den vorhandenen Wechselrichter 3 verändern. Die zweite Energiequelle Q2 ist über eine Schaltvorrichtung 9 mit den Eingangsklemmen 2,2'des Wechselrichters 3 verbunden, an denen auch der PV-Generator Q1 angeschlossen ist. Der PV-Generator Q1 ist jetzt mit einer größeren Anzahl von in Reihe geschalteten PV-Modulen 11 versehen, als zur Zeit ohne vorliegende Erfindung möglich wäre. So sind z.B. zwölf Module 11 anstelle der eingangs genannten acht Module 11. Im Betrieb hat dieses eine Betriebsspannung von 12 mal 60 Volt zur Folge, bei einem Volt pro Zelle und 60 Zellen pro Modul 11. Dies ergibt 720 Volt, die bei einem Vorgehen nach dem Stand der Technik zu einer Leerlaufspannung von 1,5 mal 720 gleich 1080 Volt führt. Kommt es dann zu einer Abschaltung des PV-Generators Q1 vom Netz 7, wobei das Schaltelement 5 dann geöffnet ist, kann der PV-Generator Q1 nicht mehr an das Versorgungsnetz 7 angekoppelt werden und seine Energiegewinnung geht für den Rest des Tages verloren.

Anders verhält es sich bei Einsatz der zweiten Energiequelle Q2. Der abgeschaltete Photovoltaikgenerator Q1 ist bei geöffnetem ersten Schalter 1 vom Wechselrichter 3 getrennt und bleibt beim Zuschaltvorgang zunächst unberücksichtigt. Die zweite Energiequelle Q2 wird mittels Schließens der Schaltvorrichtung 9 mit dem Wechselrichter 3 verbunden. Dieser benutzt die zweite Energiequelle Q2, um den Synchronisationsvorgang mit dem Netz 7 über eine im Wechselrichter 3 befindliche Steuer- und Regeleinheit 13 einzuleiten. Nach erfolgter Synchronisation mit den Verhältnissen im Versorgungsnetz 7, d.h. wenn die Phasenlage, die Frequenz und die Spannung mit der im Netz 7 übereinstimmen, wird das Schaltelement 5 geschlossen und der Wechselrichter 3 ist wieder am Versorgungsnetz 7 angeschlossen.

Im Folgenden sind zwei Szenarien möglich, um die Primärquelle Q1 mit dem Wechselrichter 3 zu verbinden:
- Es wird die zweite Energiequelle Q2 durch Öffnen der Schaltvorrichtung 9 vom Wechselrichter 3 getrennt und unmittelbar darauf wird im Mikrosekundenbereich der erste Schalter 1 geschlossen, bevor die Synchronisation verloren geht, oder
- Die erste Energiequelle Q1 wird nach erfolgter Synchronisation durch Schließen des ersten Schalters 1 parallel zur zweiten Energiequelle Q2 auf die Eingangsklemmen 2,2' des Wechselrichters 3 geschaltet, und die Schaltvorrichtung 9 wird anschließend geöffnet.

Zwischen der Schaltvorrichtung 9 und den Eingangsklemmen 2,2 des Wechselrichters 3 kann eine Sperrdiode 15 angeordnet sein, die verhindert, dass Strom in die zweite Energiequelle 'Q2 hineinfließt, wenn beim Zuschalten der Primärenergiequelle Q1 diese eine höhere Spannung aufweist. Bei ausreichender Spannungsfestigkeit der Sperrdiode 15 kann dann die zweite Energiequelle Q2 falls gewünscht auch über einen längeren Zeitraum mit dem Wechselrichter 3 verbunden bleiben und der Synchronisationszustand wird permanent aufrecht erhalten.

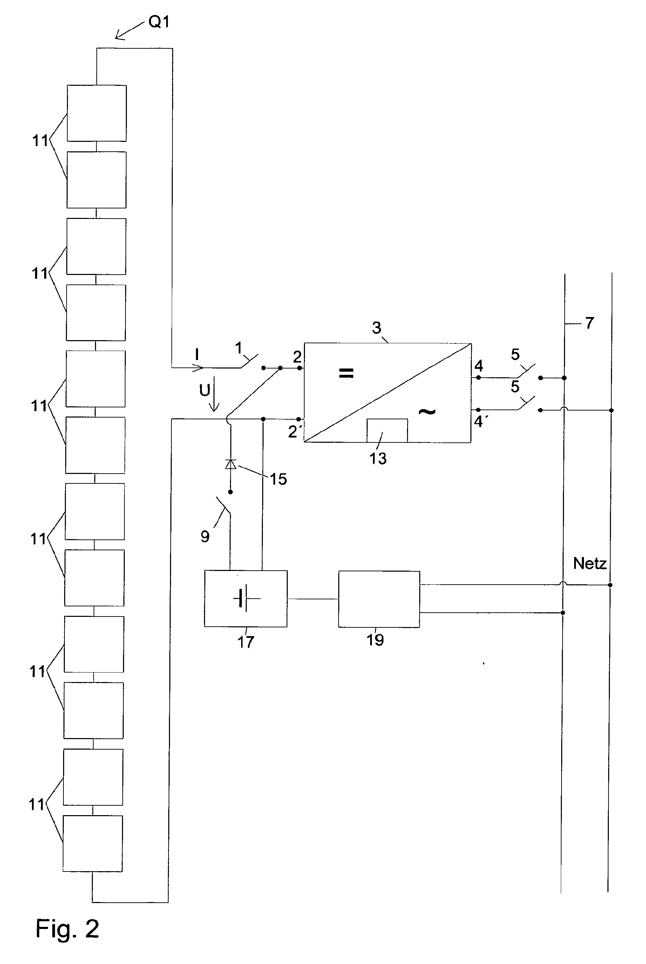

In der Figur 2 ist als zweite Energiequelle Q2 eine Batterie 17 gezeigt, die über ein am Versorgungsnetz 7 angeschlossenes Netzteil 19 geladen werden kann. Bei ausreichend dimensionierter Kapazität kann auf das Netzteil verzichtet werden, da die Batterie auch über die Primärenergiequelle Q1 geladen werden kann.

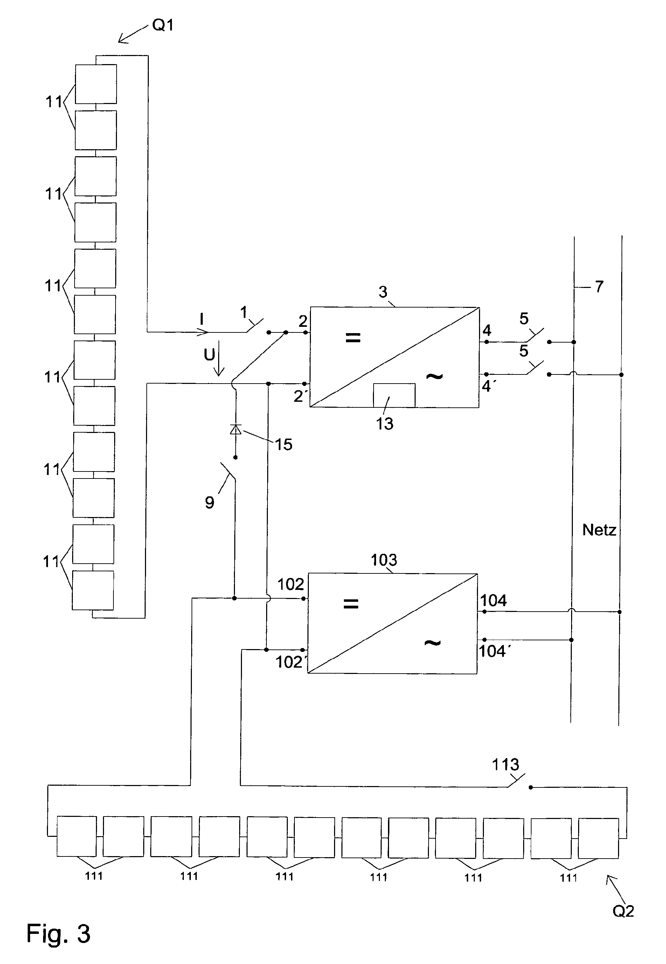

Eine weitere Variante zur Sekundärenergiequelle Q2 ist in der Figur 3 dargestellt. Ein großer Solarpark wird mehrere PV-Generatoren umfassen, von denen ein weiterer zusätzlich zur Primärquelle Q1 vorhandener PV-Generator in der Figur 3 über seine PV-Modulen 111 symbolisiert ist. Der weitere PV-Generator 111 musste nicht wie die Primärquelle Q1 vom Netz 7 genommen werden, sondern verblieb am Netz 7 und speiste ungestört seine erzeugte Solarenergie über den an ihm angeschlossenen Wechselrichter 103 in das Netz 7 ein. Dies erlaubt es, den weiteren PV-Generator 111 als zweite Energiequelle Q2 im Sinne vorliegender Erfindung heranzuziehen. Der Anfahrvorgang verläuft analog zu dem in Verbindung mit der Figur 1 beschriebenem: Bei geöffnetem ersten Schalter 1 wird die Schaltvorrichtung 9 geschlossen, wodurch Eingangsklemmen 102,102 des Wechselrichters 103 mit den Eingangsklemmen 2,2'des Wechselrichters 3 parallel verbunden werden. Auch hier wird unabhängig von dem ersten PV-Generator Q1 eine Anfahrquelle Q2 zur Verfügung gestellt.

Die Sekundärenergiequelle Q2 weist noch einen Schalter 113 auf, der dazu dient bei zu geringer Systemspannung an den PV Modulen 111, diese vom Wechselrichter 103 zu trennen und die Primärquelle Q1 über das Netz mit dem Wechselrichter 103, der zu Sekundärenergiequelle Q2 gehört, anzufahren.

### Bezugszeichenliste

- 1: erster Schalter
- 2,2': Eingangsklemmen
- 3: Wechselrichter
- 4,4': Ausgangsklemmen
- 5: Schaltelement
- 5a,5b: Hilfskontakte
- 7: Versorgungsnetz
- 9: Schaltvorrichtung
- 11: PV-Modul
- 13: Steuer- und Regeleinheit
- 15: Sperrdiode
- 17: Batterie
- 19: Netzteil
- 102,102': Eingangsklemmen zweiter Wechselrichter
- 104,104': Ausgangsklemmen zweiter Wechselrichter
- 103: zweiter Wechselrichter
- 111: PV-Module
- 113: Schaltelement

## Patentansprüche

1. Verfahren zur Vorbereitung der Netzsynchronisation eines Wechselrichters (3) mit einem Photovoltaikgenerator als Primärenergiequelle (Q1), wobei der Wechselrichter (3) an ein Stromversorgungsnetz (7) anschließbar ist, bei dem
- der Wechselrichter (3) von einer zusätzlichen Energiequelle (Q2) mit Energie versorgt wird, dass
- die Frequenz, die Phasenlage und die Ausgangsspannung des Wechselrichters (3) mit Hilfe der zusätzlichen Energiequelle (Q2) an die Verhältnisse im Stromversorgungsnetz (7) angepasst werden, und dass
- nach der erfolgten Anpassung die Primärenergiequelle (Q1) mit dem Wechselrichter (3) verbunden wird,
- die zusätzliche Energiequelle (Q2) eine unabhängig von der Primärenergiequelle (Q1) betreibbare Gleichstromquelle ist, und bei dem
- die zusätzliche Energiequelle (Q2) parallel zu den Eingangsklemmen (2,2') des Wechselrichters (3) verschaltet ist.

2. Verfahren nach Anspruch 1, **dadurch gekennzeichnet, dass** die zusätzliche Energiequelle (Q2) nach erfolgter Anpassung von dem Wechselrichter (3) getrennt wird, bevor die Primärenergiequelle (Q1) mit dem Wechselrichter (3) verbunden wird.

3. Verfahren nach Anspruch 1, **dadurch gekennzeichnet, dass** die zusätzliche Energiequelle (Q2) unter Zwischenschaltung einer Sperrdiode (15) permanent mit dem Wechselrichter (3) verbunden ist.

4. Verfahren nach Anspruch 2, **dadurch gekennzeichnet, dass** nach der erfolgten Anpassung der Frequenz und der Phasenlage des Wechselrichters (3), dieser mittels seiner elektrischen Ausgangakontakte (4,4') mit dem Stromversorgungsnetz (7) verbunden wird, bevor die zusätzliche Energiequelle (Q2) von dem Wechselrichter (3) getrennt wird.

5. Verfahren nach einem der Ansprüche 1 bis 2, **dadurch gekennzeichnet, dass** die zusätzliche Energiequelle (Q2) über eine Schaltvorrichtung (9) an die Eingangsklemmen (2,2') des Wechselrichters (3) zuschaltbar ist.

6. Verfahren nach Anspruch 5, **dadurch gekennzeichnet, dass** die Schaltvorrichtung (9) gleichzeitig mit dem Trennen der zusätzlichen Gleichstromquelle (Q2) vom Wechselrichter (3) den Photovoltaikgenerator als primäre Gleichstromquelle (Q1) mit dem Wechselrichter (3) verbindet.

7. Verfahren nach einem der Ansprüche 1 bis 6, **dadurch gekennzeichnet, dass** die zusätzliche Energiequelle (Q2) aus dem Stromversorgungsnetz (7) gespeist wird.

8. Verfahren nach Anspruch 1 bis 6, **dadurch gekennzeichnet, dass** die zusätzliche Energiequelle (Q2) ein elektrischer Energiespeicher (17) ist.

9. Verfahren nach Anspruch 7, **dadurch gekennzeichnet, dass** zwischen dem Wechselrichter (3) und dem Stromversorgungsnetz (7) ein Schaltelement (5) vorgesehen ist, bei dessen Betätigung der Wechselrichter (3) an das Stromversorgungsnetz (7) angekoppelt wird und die zusätzliche Energiequelle (Q2) mittels Hilfskontakten (5a,5b) vom Stromversorgungsnetz (7) getrennt wird.

10. Verfahren nach einem der Ansprüche 1 bis 7, **dadurch gekennzeichnet, dass** die Leistung der zusätzlichen Energiequelle (Q2) unterhalb von 10%, bei einem Photovoltaikgenerator großer Leistung insbesondere unterhalb von 1%, der Nennleistung des Wechselrichters (3) ist.

11. Verfahren nach einem der Ansprüche 1 bis 10, **dadurch gekennzeichnet, dass** die zusätzliche Energiequelle (Q2) ein nicht vom Stromversorgungsnetz (7) genommener Wechselrichter (103) eines weiterhin betriebenen anderen Photovoltaikgenerators (111) ist.

12. Vorrichtung zur Durchführung des Verfahrens nach einem der Ansprüche 1 bis 10, **gekennzeichnet durch**
a) eine Vielzahl von Photovoltaik-Modulen (11) als Primärenergiequelle (Q1),
b) einen an die Photovoltaik-Module (11) angeschlossenen Wechselrichter (3), der von den Photovoltaik-Modulen (11) mit einer Gleichspannung (U) und einem Gleichstrom (I) gespeist ist,
c) eine zusätzliche Gleichstromquelle (Q2) die parallel an die Eingangsklemmen (2,2') des Wechselrichters (3) anschließbar ist,
d) eine Regel- und Steuereinheit (13) die die Ausgangsspannung an den Ausgangsklemmen ((4,4') des Wechselrichters (3) mittels der zusätzlichen Energiequelle (Q2) regelt und steuert, bis die Netzfrequenz, die Phasenlage und die Spannung des Stromversorgungsnetzes (7) an den Ausgangsklemmen (4,4') anliegen, und
e) einen Schalter (5), mittels dem die Ausgangsklemmen (4,4') des Wechselrichters (3) an das Stromversorgungsnetz (7) anschließbar ist.

13. Vorrichtung nach Anspruch 12, **dadurch gekennzeichnet, dass** die zusätzliche Energiequelle (Q2) eine Gleichspannung zwischen 300 Volt und 800 Volt zur Verfügung stellt.

14. Vorrichtung nach Anspruch 12 oder 13, **dadurch gekennzeichnet, dass** die zusätzliche Energiequelle im Gehäuse des Wechselrichters (3) untergebracht ist.
